# EUROPEAN PATENT APPLICATION

(11) **EP 4 303 674 A1**
(43) Date of publication of application: **10.01.2024**
(21) Application number: 23180897.3
(22) Date of filing: 22.06.2023
(51) Int. Cl.: G05B 19/042, G05B 19/418, G06F 13/42

(54) **CONTROL SYSTEM FOR A SPINNING FACTORY**

(30) Priority: 08.07.2022 CH 8232022
(71) Applicant: Maschinenfabrik Rieter AG, 8406 Winterthur (CH)
(72) Inventor: LÜTHARD, Reto, 8406 Winterthur (CH); SCHNELLMANN, Martin, 8500 Frauenfeld (CH)

(57) **Abstract**

The present invention concerns a control system (100) for a spinning factory (200). Said control system (100) comprises a plurality of apparatus (110) configured to process prepared cotton into yarn and a plurality of parallel bus communication lines (120).

Said plurality of parallel bus communication lines (120) comprises a plurality of receiver lines (121, 122, 123) and a plurality of transmitter lines (126, 127, 128) configured to receive and to transmit data parallelly on said plurality of receiver lines (121, 122, 123) and said plurality of transmitter lines (126, 127, 128) respectively, and each apparatus (111, 112, 113) of said plurality of apparatus (110) comprises a transceiver (114) configured to be connected to said plurality of parallel bus communication lines (120) such as to receive and/or to transmit data parallelly.

## Description

### Technical field of the invention

The present invention concerns a spinning factory and more specifically a control system configured to control the workflow of a plurality of apparatus. The present invention regards the communication between apparatus of said plurality of apparatus.

### State of the art

A spinning factory may comprise several machines in order to transform a prepared cotton into a yarn. The different machines are connected via a serial communication interface for example, and each machine depends on the transmission of the information of the previous machine.

Unfortunately, if there is a poor connection, some problem may occur, and some information may get lost. Further, if a machine is in maintenance, the communication may be interrupted for the time being and the other machine may not get the right information, which may lead to a slowdown of the production. In another case, the serial communication interface device may fail out and some delivery delay may be experienced.

### Summary of the invention

The present invention proposes to solve at least one of the aforementioned inconvenient via a Control system for a spinning factory comprising
- A plurality of apparatus: said plurality of apparatus is configured to process prepared cotton into yarn; and,
- A plurality of parallel bus communication lines: said plurality of parallel bus communication lines comprising a plurality of receiver lines and a plurality of transmitter lines configured to receive and to transmit data parallelly on said plurality of receiver lines and said plurality of transmitter lines respectively;
characterized in that
each apparatus of said plurality of apparatus comprises a transceiver configured to be connected to said plurality of parallel bus communication lines such as to receive and/or to transmit data parallelly.

Thanks to this configuration, a plurality of apparatus may be linked together and may communicate data parallelly such as each apparatus of said plurality of apparatus may read and/or transmit data without delay.

According to one embodiment, said plurality of parallel bus communication lines comprises a control bus configured to transmit commands data to and/or to receive commands from at least one apparatus of said plurality of apparatus.

Thanks to this configuration, said plurality of apparatus may communicate commands like readiness, start or stop among them and may command each other like start or stop.

According to one embodiment, each apparatus of said plurality of apparatus comprises a data address and said plurality of parallel bus communication lines comprises an address bus configured to transmit and/or to receive said data address of said at least one apparatus of said plurality of apparatus.

Thanks to this configuration, each apparatus of said plurality of apparatus may deliver data directly to another apparatus of said plurality of apparatus. For example, if an apparatus of said plurality of apparatus requests material, i.e. prepared cotton, perhaps another apparatus of said plurality of apparatus may answer positively and may deliver material.

According to one embodiment, said plurality of parallel bus communication lines comprises a data bus configured to transmit data to and/or to receive data from said at least one apparatus of said plurality of apparatus.

Thanks to this configuration, each apparatus of said plurality of apparatus may broadcast its status and may inform another apparatus of said plurality of apparatus.

According to one embodiment, said plurality of apparatus comprises a process control unit configured to be connected to said transceiver and to read and/or to write data commands, data address, and/or data from at least one apparatus of said plurality of apparatus, and/or to at least one apparatus of said plurality of apparatus.

Thanks to this configuration, each apparatus of said plurality of apparatus may process information or data received and may respond such as to improve the workflow.

According to one embodiment, said plurality of parallel bus communication lines comprises a power supply line and a ground such as to supply said transceiver.

Thanks to this configuration, said transceiver may be supplied independently from said host apparatus such as said Bale opener, said fiber mixing machine, said Carding machine, said draw frame, said combing machine, said roving frame, said Ring spinning machine, said fiber transport system and/or said transport system.

According to one embodiment, said transceiver comprises a relay control.

Thanks to this configuration, said relay control may use said power supply line and said ground to transmit said information or data via plurality of transmitter lines

According to one embodiment, said plurality of apparatus comprises at least three apparatus among a Bale opener, a fiber mixing machine, a Carding machine, a draw frame, a combing machine, a roving frame, a Ring spinning machine, a fiber transport system and/or a transport system.

Thanks to this configuration, at least three apparatus among a Bale opener, a fiber mixing machine, a Carding machine, a draw frame, a combing machine, a roving frame, Ring spinning machine, a fiber transport system and/or a transport system may be linked together and may communicate data parallelly such as each apparatus of said plurality of apparatus may read and/or transmit data without delay.

### Brief description of the Drawings

The foregoing and other purposes, features, aspects and advantages of the invention will become apparent from the following detailed description of embodiments, given by way of illustration and not limitation with reference to the accompanying drawings, in which:
- figure 1 represents a control system (100) in a spinning factory (200) according to an embodiment of the present invention; and,
- figure 2 depicts a fiber mixing machine (112) connected to a plurality of parallel bus communication lines (120) via a transceiver (114) according to an embodiment.

### Detailed description

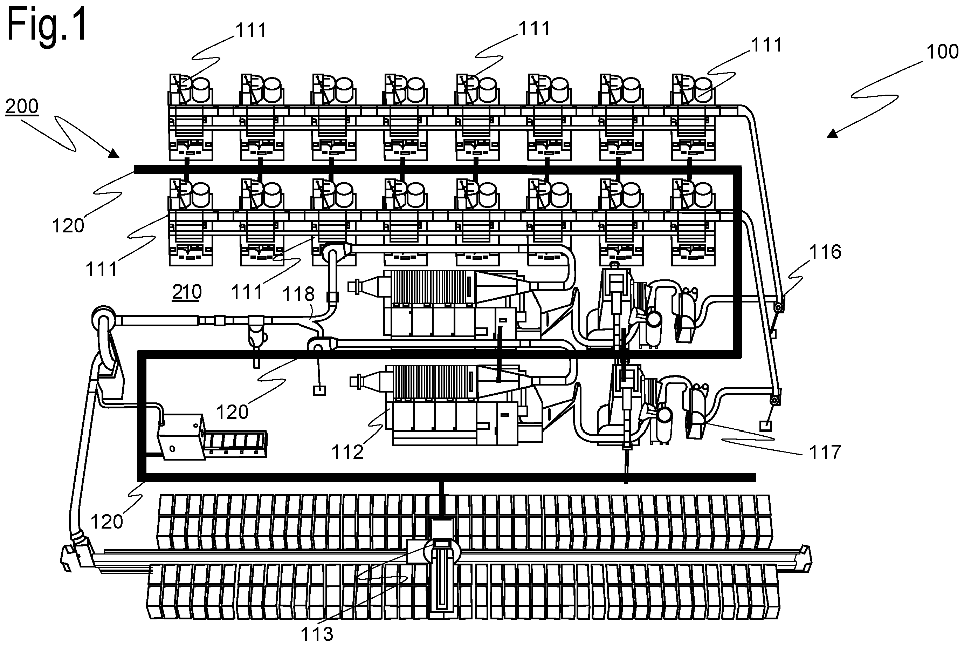

A spinning factory **200** may comprise a plurality of apparatus **110** configured to process prepared cotton into yarn. For example, said plurality of apparatus **110** may include a Bale opener **111,** a fiber mixing machine **112,** a Carding machine **113,** a draw frame, a combing machine, a roving frame, a Ring spinning machine, a fiber transport system **116, 117, 118** and/or a transport system, as illustrated in fig. 1. Said fiber transport system may comprise a fan **116,** a condenser **117** and/or a flap **118** for instance, and said transport system may include a sliver can transporter for example. At least three apparatus **111, 112, 113** among said plurality of apparatus **110** may communicate some information or data in order to improve and to control the yarn production. In order to allow each apparatus to have access to those information or data, without depending on the previous apparatus, the present invention proposes a Control system **100** for a spinning factory **200,** preferably for a blowroom **210.** Said Control system **100** may comprise said plurality of apparatus **110** and a plurality of parallel bus communication lines **120.**

Said plurality of parallel bus communication lines **120** may present a plurality of receiver lines **121, 122, 123** and a plurality of transmitter lines **126, 127, 128** configured to receive and to transmit data parallelly on said plurality of receiver lines **121, 122, 123** and said plurality of transmitter lines **126, 127, 128** respectively. For example, an 8-bit or a 16-bit parallel bus communication lines **120** may comprise 8 or 16 receiver lines **121, 122, 123** and 8 or 16 transmitter lines **126, 127, 128** respectively such as to convey eight or sixteen bits simultaneously. An advantage of the present invention is the speed of the transmission since the information rather the data are provided simultaneously whereas a serial communication interface would convey those same bits of information sequentially, one at a time.

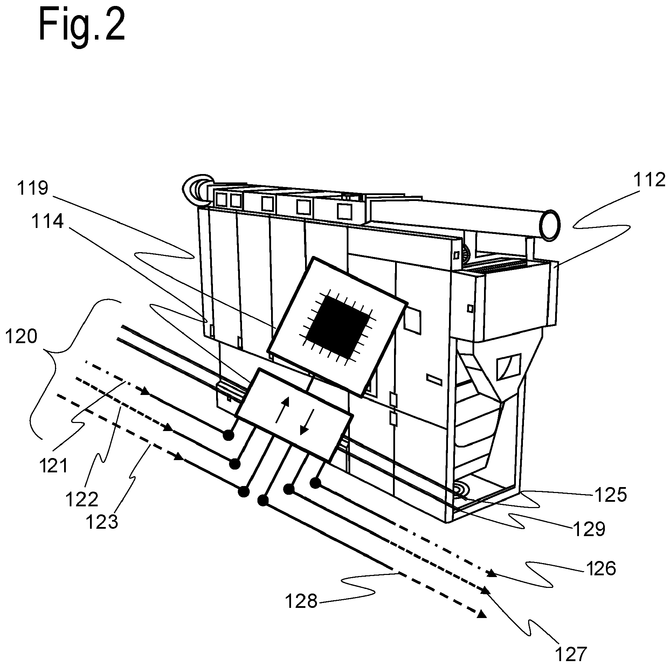

As observed in fig. 2, each apparatus **111, 112, 113** of said plurality of apparatus **110** may comprise a transceiver **114** such as each apparatus **111, 112, 113,** preferably of a blowroom **210,** may be linked together and may communicate data parallelly and may read and/or transmit information or data via said plurality of parallel bus communication lines **120** without delay. In others words, at least three apparatus **111, 112, 113** among a Bale opener **111,** a fiber mixing machine **112,** a Carding machine **113,** a draw frame, a combing machine, a roving frame, Ring spinning machine and/or a transport system may be linked together and may communicate data parallelly such as each apparatus of said plurality of apparatus **110** may read and/or transmit data without delay. Further, in order to interpret the information and to improve the workflow, said plurality of apparatus **110** may comprise a process control unit **119** configured to be connected to said transceiver **114** such as each apparatus of said plurality of apparatus **110** may process information or data received, as depicted in figure 2. In some cases, said transceiver **114** may comprise a relay control including a plurality of electrically operated switches for example.

Still in fig. 2, said plurality of parallel bus communication lines **120** may comprise a control bus **121, 126,** an address bus **122, 127** and/or a data bus **123, 128.** In this example, said control bus **121, 126** may comprise a control bus receiver line **121** and a control bus transmitter line **126,** said address bus **122, 127** may include an address bus receiver line **122** and an address bus transmitter line **127** and/or said data bus **123, 128** may comprise a data bus receiver line **123** and a data bus transmitter line **128.** Of course, if a command needs 8 or 16 bits, said control bus receiver line **121** may comprise 8 or 16 lines for example. The same applies for the other lines. Further said plurality of parallel bus communication lines **120** may comprise a power supply line **125** of 12 VDC, 24 VDC or 48 VDC for example, and a ground **129** of 0 VDC for instance such as to supply said transceiver **114** independently from said host apparatus such as said Bale opener **111,** said fiber mixing machine **112,** said Carding machine **113,** said draw frame, said combing machine, said roving frame, said Ring spinning machine, said fiber transport system **116, 117, 118** and/or said transport system. Further, said power supply line **125** and said ground **129** may be used by said transceiver **114,** rather said relay control, to transmit information or data said via plurality of transmitter lines **126, 127, 128.**

Thus, in practice, a fiber mixing machine **112** may transmit its readiness over the control bus transmitter line **126** with its status "Stand by" over said data bus transmitter line **128.** to said plurality of apparatus **110.** In this case, as it may be construed, no address may be specified over said address bus transmitter line **127** since this information is transmitted to all apparatus **110.** For example, in case said transceiver **114** is said relay control **114,** said relay control **114** may use said power supply line **125** and said ground **129** to transmit said information or data, i.e. said status, via plurality of transmitter lines **126, 127, 128**

A Carding machine **113** of said plurality of apparatus **110** may request cotton, and said process control unit **119** of said Carding machine **113** may receive this information over said control bus receiver line **121** and/or data bus receiver line **123.** In response to said fiber mixing machine **112,** said Carding machine **113** may command fiber mixing machine **112** over the control bus transmitter line **126** and said address bus transmitter line **127,** such as to address this command directly to said fiber mixing machine **112** with an additional information like the flow of delivery over said data bus transmitter line **128** for instance.

Once said fiber mixing machine **112** receive said request from said Carding machine **113,** said fiber mixing machine **112** may start to process cotton and deliver it to said Carding machine **113.** Thus, each apparatus of said plurality of apparatus **110** may deliver data directly to another apparatus of said plurality of apparatus **110** such as to improve the workflow.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. Control system (100) for a spinning factory (200) comprising
- A plurality of apparatus (110): said plurality of apparatus (110) is configured to process prepared cotton into yarn; and,
- A plurality of parallel bus communication lines (120): said plurality of parallel bus communication lines (120) comprising a plurality of receiver lines (121, 122, 123) and a plurality of transmitter lines (126, 127, 128) configured to receive and to transmit data parallelly on said plurality of receiver lines (121, 122, 123) and said plurality of transmitter lines (126, 127, 128) respectively;
**characterized in that**
each apparatus (111, 112, 113) of said plurality of apparatus (110) comprises a transceiver (114) configured to be connected to said plurality of parallel bus communication lines (120) such as to receive and/or to transmit data parallelly.

2. Control system (100) according to claim 1, wherein said plurality of parallel bus communication lines (120) comprises a control bus (121, 126) configured to transmit commands data to and/or to receive commands from at least one apparatus of said plurality of apparatus (110).

3. Control system (100) according to claim 1 or 2, wherein each apparatus (111, 112, 113) of said plurality of apparatus (110) comprises a data address and said plurality of parallel bus communication lines (120) comprises an address bus (122, 127) configured to transmit and/or to receive said data address of said at least one apparatus of said plurality of apparatus (110).

4. Control system (100) according to at least one of the preceding claims 1 to 3, wherein said plurality of parallel bus communication lines (120) comprises a data bus (123, 128) configured to transmit data to and/or to receive data from said at least one apparatus of said plurality of apparatus (110).

5. Control system (100) according to at least one of the preceding claims 1 to 4, wherein said plurality of parallel bus communication lines (120) comprises a power supply line (125) and a ground (129) such as to supply said transceiver (114).

6. Control system (100) according to at least one of the preceding claims 1 to 5, wherein said transceiver (114) comprises a relay control.

7. Control system (100) according to at least one of the preceding claims 1 to 6, wherein said plurality of apparatus (110) comprises a process control unit (119) configured to be connected to said transceiver (114) and to read and/or to write data commands, data address, and/or data from at least one apparatus of said plurality of apparatus (110), and/or to at least one apparatus of said plurality of apparatus (110).

8. Control system (100) according to at least one of the preceding claims 1 to 7, wherein said plurality of apparatus (110) comprises at least three apparatus (111, 112, 113) among a Bale opener (111), a fiber mixing machine (112), a Carding machine (113), a draw frame, a combing machine, a roving frame, a Ring spinning machine, a fiber transport system and/or a transport system.
